# EUROPEAN PATENT APPLICATION

(11) **EP 1 434 115 A1**
(43) Date of publication of application: **30.06.2004**
(21) Application number: 02080484.5
(22) Date of filing: 23.12.2002
(51) Int. Cl.: G04G 15/00

(54) **System and method for configuring time dependent devices and services**

(71) Applicant: Koninklijke KPN N.V., 9726 AE Groningen (NL)
(72) Inventor: De Koning, Nicole Maria, 2273 JS Voorburg (NL); Visser, Remko, 2023 VP Haarlem (NL)
(74) Representative: Prins, Adrianus Willem, Mr. Ir.

(57) **Abstract**

The present invention provides a system for programming time dependent devices and services that is both very easy to use and reliable. This aim is reached by programming the time schedule in different layers. The layers differ in completeness and flexibility to change. This has the advantage that on the one hand the user can always rely on a basic time schedule, which will not change very often, but on the other hand the user is always able to override this basic time schedule.

## Description

### Field of the Invention

The invention is related to systems that allow the user to configure a time-dependent device or service in a easy and reliable way, by providing different layers of time-action schedules.

### Background of the Invention

Nowadays people have a lot of devices and services at their disposal that can be configured or programmed to their personal preferences and needs. For some devices and services these personal settings depend, completely or partly, on the time of the day or the day of the week. These devices and services include for example call forwarding systems on both mobile and fixed telephone lines, Video Cassette Recorders (VCR) , and different home network devices like e.g. the lighting of the house or the central heating thermostat.

Call forwarding systems usually provide the user with the possibility to instruct the network that, from the moment of activating the call forwarding system, all calls to his number, either mobile or fixed, should be forwarded to another extension. For the fixed network this is done by sending a string of DTMF codes, for the mobile network the handset usually provides a menu to activate call forwarding system. This very basic call forwarding systems can be extended with the possibility of entering a time-dependent schedule indicating to which extension a call should be forwarded depending on the time of day.

US5592541 discloses an apparatus and method for forwarding incoming calls by utilizing a subscriber defined routing list. Incoming calls are forwarded i.a. according to a time-of-day or day-of week. However a major drawback of this system is that it is very difficult for the user to update and configure the service logic defining incoming call processing because the subscriber has to engage in a long "dialogue" with the system, and has no overview of his configuration.

US20025/0031207 discloses a communication network system i.a. comprising a user editable database providing the user with the possibility to determine what has to be done with a call or a message from a certain caller or sender on a specific time of the day. However a drawback of this system is that although the configuring in done through a user friendly computer interface, the database is still rigid in the sense that it cannot be easily changed during the course of the day.

It is common knowledge that programming a VCR to record a specific broadcast is not an easy job to do. On screen programming has proved to be a big improvement over programming by inputting a series of keystrokes on the VCR device itself. On screen programming however still does not provide the user with a clear overview of the broadcasts actually recorded. WO01/11867 therefor discloses a method for transferring programming data to electronic devices, such as VCRs. A device such as a personal computer can be used to select programming data from a website displaying a listing of television programs to be recorded. The personal computer can then communicate this data to a transfer device using DTMF tones to communicate with a data transfer device. The data transfer device can then accept the commands from the PC and translate them into infrared commands for programming the VCR. A drawback of this system is again the lack of flexibility. Once the user has programmed his VCR and leaves the house, it is not easy to change the programming schedule.

Home Network Systems provide the user with the possibility of centrally and even remotely controlling different electronic appliances in his house. For example the user can programme a device that controls the lighting in the house or the central heating system. Often these devices function on a time dependent basis. The user programs the device with a time schedule of the points of time that he will get out of bed, leave the house to go to work, return home, get to bed etc. Usually these devices have fixed time schedules for example for each day of the week.

The existing means for programming call forwarding systems, VCR's, Home Network Systems and other time-dependent services and devices all lack the combination of flexibility and reliability that users of these devices and services require. Present day users of these devices and services rarely have rigid time schedules. More often than not their agenda changes during the course of the day. It should be possible to flexibly adjust the functioning of time-dependent devices and services to the dynamic life of the user, while at the same time having the possibility to rely on a basic time-schedule as a fall back scenario.

### Problem definition and aim of the invention

A drawback of existing means for configuring and programming the above mentioned and other time-dependent services and devices is that they are very inflexible and do not really fulfil the needs of the user. This leads to disappointment and decreased use of these devices and services.

The aim of the present invention is to provide a flexible and reliable system and method for programming and configuring time-dependent devices and services.

### Summary of the Invention

The present invention provides a system for programming time dependent devices and services that is both very easy to use and reliable. This aim is reached by programming the time schedule in different layers. The layers differ in completeness and flexibility to change. This has the advantage that on the one hand the user can always rely on a basic time schedule, which will not change very often, but on the other hand the user is always able to override this basic time schedule.

What is claimed is a system for configuring or programming a time-dependent device or service comprising:
- a basic layer providing an action schedule for a predetermined set of points in time, preferably for every point in time;
- at least one additional layer arranged to provide an action schedule for a point in time that overrides said action schedule of said basic layer.

To facilitate the ease of use and the flexibility of the system for the user, the user will be able to programme the different layers of the system through different devices.

An internet site might be used to define the basic layer of a time schedule. Because this layer will not change regularly the internet will be a convenient way to edit this time schedule.

Another example is an automatic link between the electronic calender and another layer of the time schedule. In this way the time schedule of the time dependent device or service can always be up-to-date.

However the user should always be able to instantely adapt the active time schedule to the current events. It would be very convenient to use a mobile device, like a phone or a PDA, for this purpose.

In an embodiment of the invention the system for programming a time dependent device is arranged as a call forwarding system. Providing the user with the possibility to define in different layers which call profile should be active at a given point in time.

The invention also relates to a method for configuring or programming a time-dependent device or service comprising the steps of:
- defining a basic layer providing an action schedule for a predetermined set of points in time, preferably for every point in time;
- defining at least one additional layer arranged to provide an action schedule for a point in time that overrides said action schedule of said basic layer.

### Brief Description of the Drawings

Figure 1 shows a system diagram of an embodiment of a call forwarding system according to the invention.
Figure shows a screen shot of the main menu of the exemplary call forwarding system of Figure 1.
Figure 3 shows a screen shot of the exemplary call forwarding system of Figure 1, indicating how different phone numbers can be integrated in the system.
Figure 4 shows a screen shot of the exemplary call forwarding system of Figure 1, showing different Call Profiles within the system.
Figure 5a shows a screen shot of the exemplary call forwarding system of Figure 1, indicating how to add a Call Profile to the system.
Figure 5b shows a screen shot of the exemplary call forwarding system of Figure 1, indicating how to edit a Call Profile.
Figure 6 shows a screen shot of the exemplary call forwarding system of Figure 1, indicating how the user of the system can define a Time Schedule of every day of the week.
Figure 7a shows a screen shot of the exemplary call forwarding system of Figure 1, indicating how activating a Call Profile as shown in Fig. 4 can be linked to the electronic calender of the user, by planning an appointment.
Figure 7b shows a screen shot of the exemplary call forwarding system of Figure 1, indicating how activating a Call Profile as shown in Fig. 4 can be linked to the electronic calender of the user, by accepting an invitation.
Figure 8a shows a screen shot of the mobile device connected to the exemplary call forwarding system of Figure 1, indicating which Call Profile is active.
Figure 8b shows a screen shot of the mobile device connected to the exemplary call forwarding system of Figure 1, indicating how the user can select another Call Profile.
Figure 9 shows a flow chart of the processing of an incoming call in the exemplary call forwarding system of Figure 1

### Detailed Description of the Invention

The present invention provides a layered system and method for programming and configuring time-dependent devices and services. For the purpose of the teaching of the invention a preferred embodiment of the system arranged as a call forwarding system will be described.

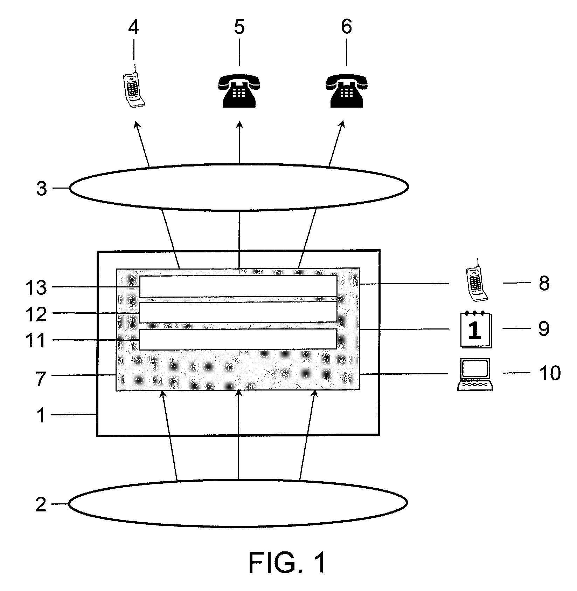

The exemplary call forwarding system (1) of Fig. 1 handles all incoming calls (2) for a user, to all his phone numbers (3), for example his mobile phone (4), his fixed phone at home (5), his fixed phone at work (6). To do this properly the call forwarding system comprises a user defined action schedule (7).

To define the action schedule the user can access the call forwarding system for example through a telephone hand set (8), through an Internet portal (10) which is arranged to communicate with the telecommunications network or through his electronic calendar means (9).The exemplary call forwarding system comprises three layers each representing an action schedule. An action schedule defines which actions should be taken by the call forwarding system at every point in time. The action schedules of the different layers differ in flexibility and completeness.The three layers of the exemplary system are: a basic layer (11), an intermediate layer (12) and a top layer (13).

The basic layer (11) is always exhaustive, in the sense that it defines an action for every point of time. The basic layer could well be programmed using an internet website (10). The basic layer will not be altered regularly, and will take the user some time to program. So an internet based user interface would be advantageous though not necessary.

The intermediate layer (12) could for instance be linked to and synchronized with the electronic calendar (9) of the user. The calendar of the user is more flexible than his basic time schedule, and changes will occur regularly. So it would be advantageous, though not necessary, to actually link the calendar and the intermediate layer automatically so that the call forwarding system is always synchronized with the calendar.

The top layer (13) reflects last minute changes in the time schedule of the user. For example a meeting was cancelled shortly before it was scheduled to start, or the duration of a meeting was different than expected. The user should always be able to reflect this change in his current action schedule. Because these changes will often occur when the user is on the move it is advantageous, bus not necessary, to enable the user to change the top layer through his handset (8).

An action schedule of the call forwarding system consist of Call Profiles. A Call Profile defines what should happen with an incoming call to any of the user's phone numbers.

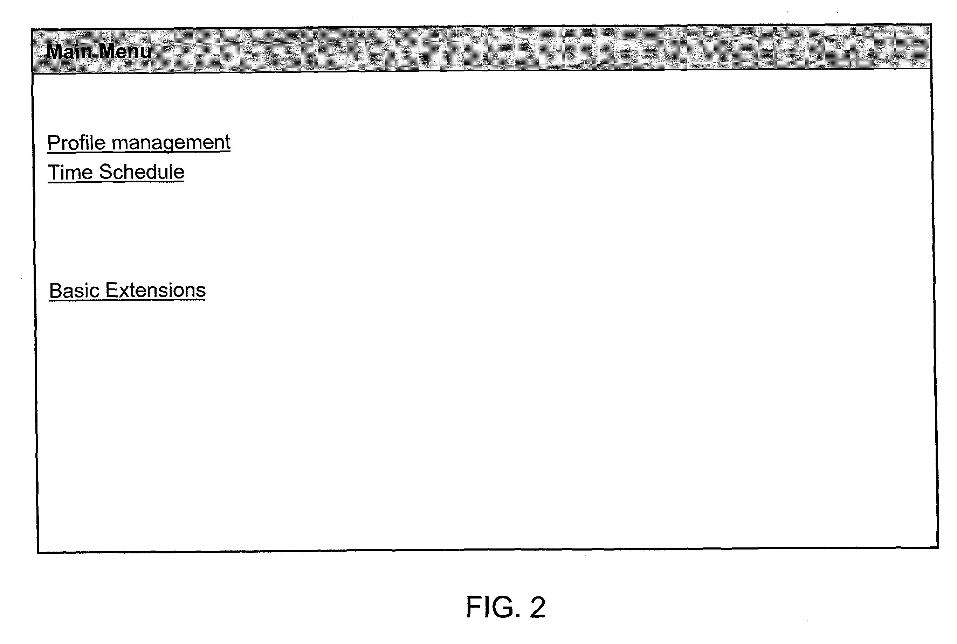

After logging in into the system by providing username and password, the user enters the mainmenu of the system, as shown in Figure 2.

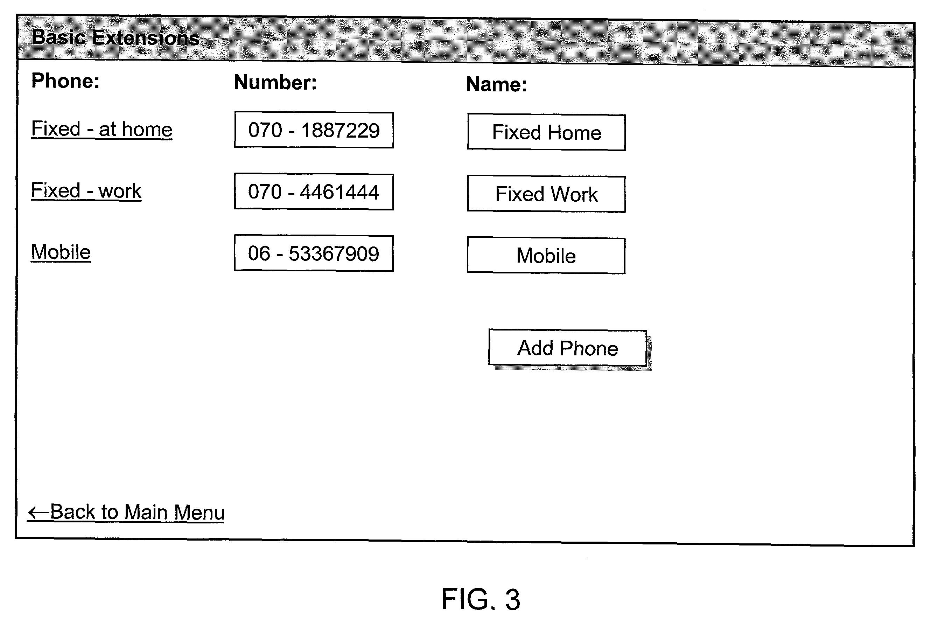

After selecting "Basic Extensions" the user can add or edit his "basic" phone numbers, as shown in Figure 3.

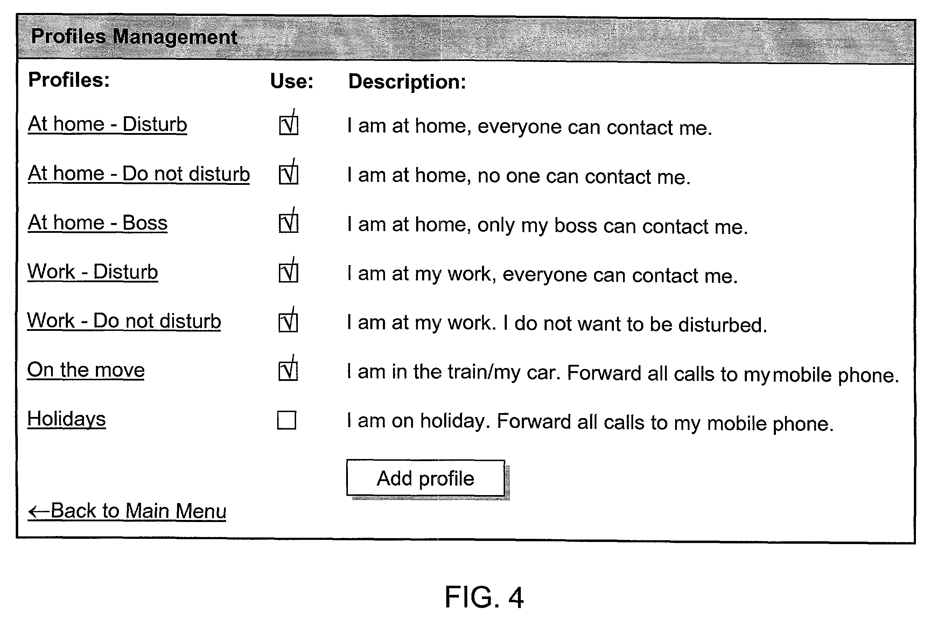

After selecting "Call Profile Management" in the main menu the user is enabled to define one of more profiles defining what should happen with incoming calls in different situation. In Figure 4 a screen shot of a list of exemplary Call Profiles is defined.

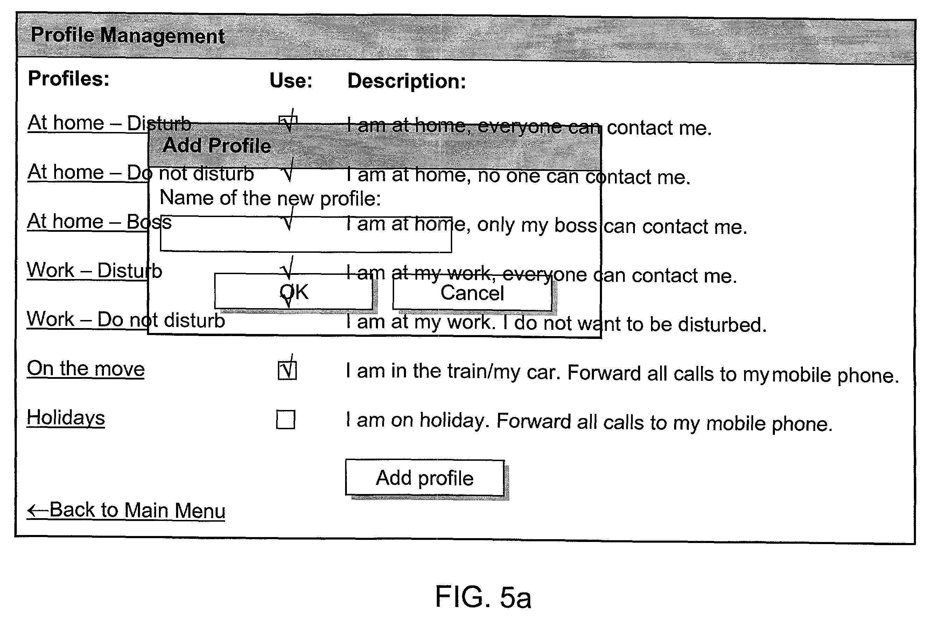

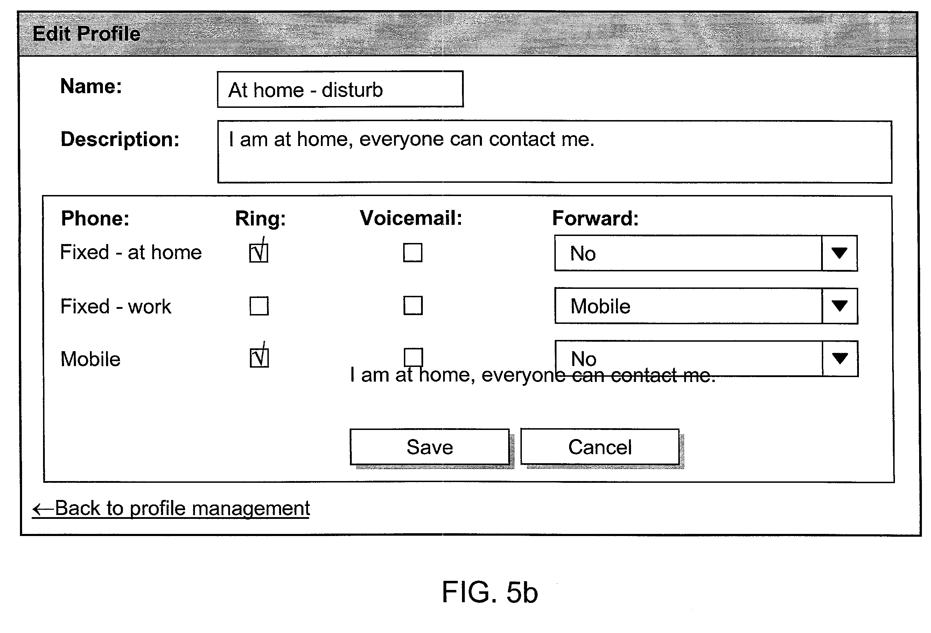

By selecting "Add Profile" the user is enabled to add another Call Profile. The steps necessary to define a Call Profile are shown in Figure 5. In Figure 5a the user is asked to enter his own meaningful name for the Call Profile, which will simplify later use of the profile. Figure 5b shows how the new Call Profile is defined in terms of what should happen with incoming calls to all the users telephone numbers.

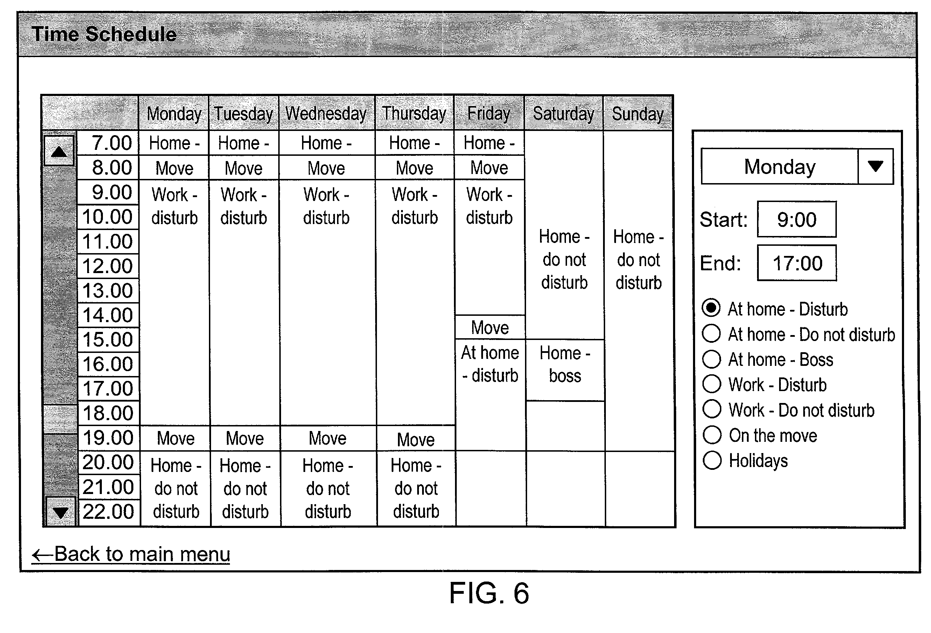

After selecting "Time Schedule" in the main menu the user is provided with a time schedule for all the days of the week. As shown in Figure 6 the user is enabled to define for every time of the day, for every day of the week which Call Profile should be used. By filling in this time schedule the user has provided the call forwarding system with the basic layer.

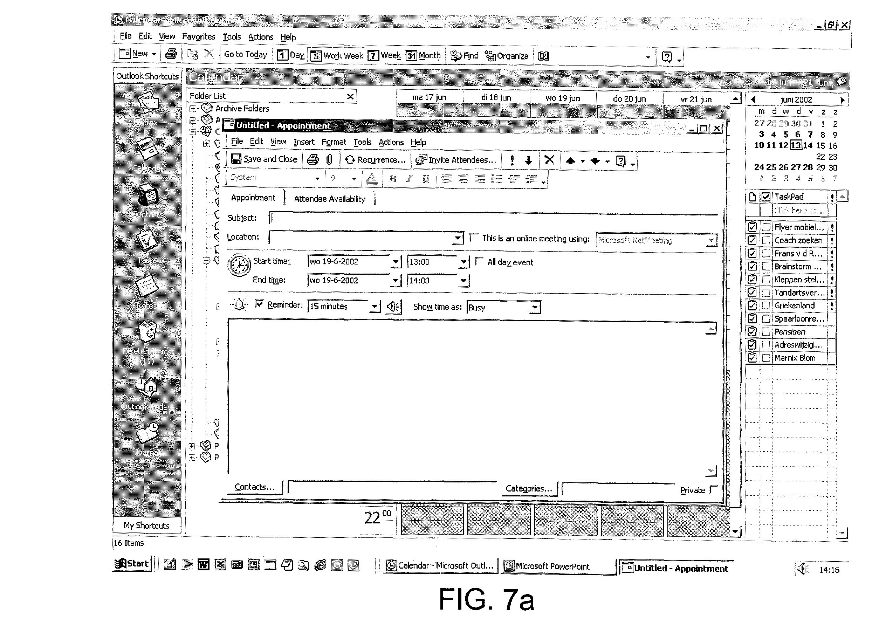

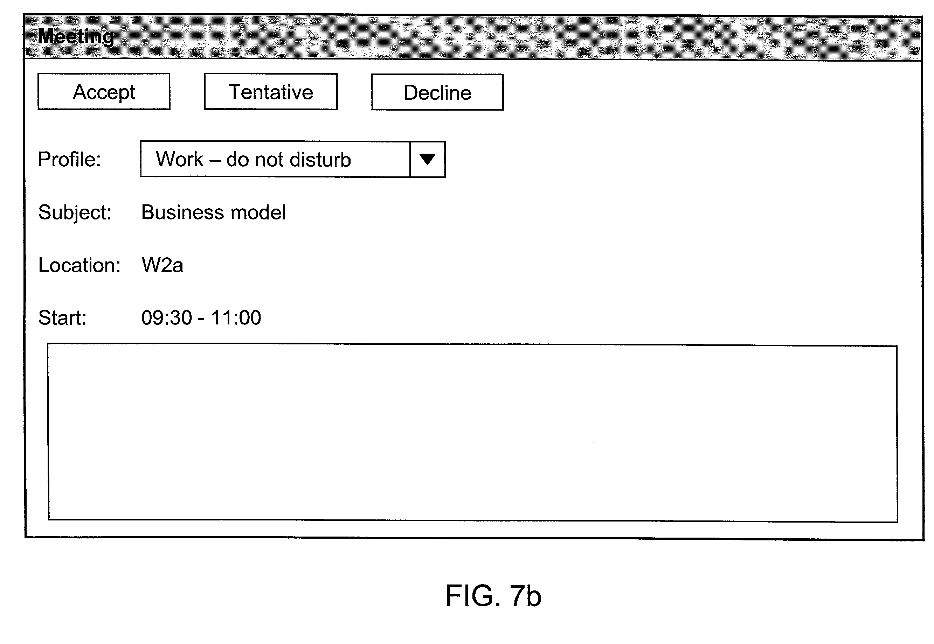

Figure 7a shows how the intermediate layer of the call forwarding system is provided with an action schedule comprising a Call Profile. When the user makes an appointment in his electronic calendar he is requested to fill in which Call Profile should be used during this appointment. The list of available Call Profiles is presented. If someone else sends an invitation for an appointment the user is requested to enter the Call Profile upon accepting the invitation, as shown in Figure 7b. Subsequently the call forwarding system is automatically synchronized with the electronic calendar.

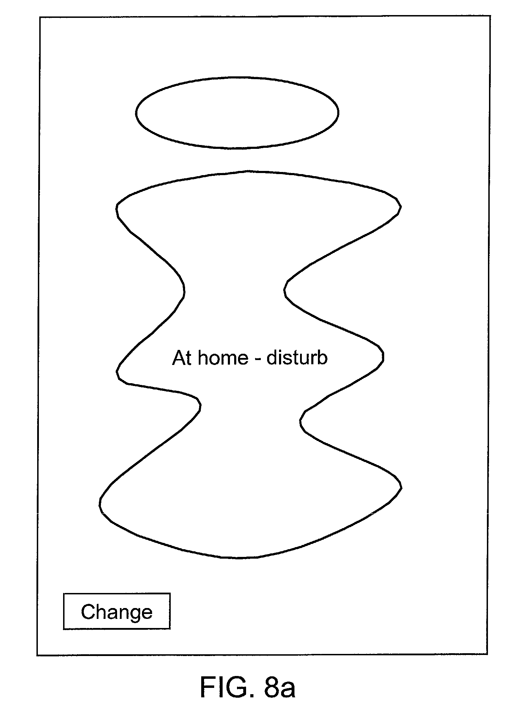

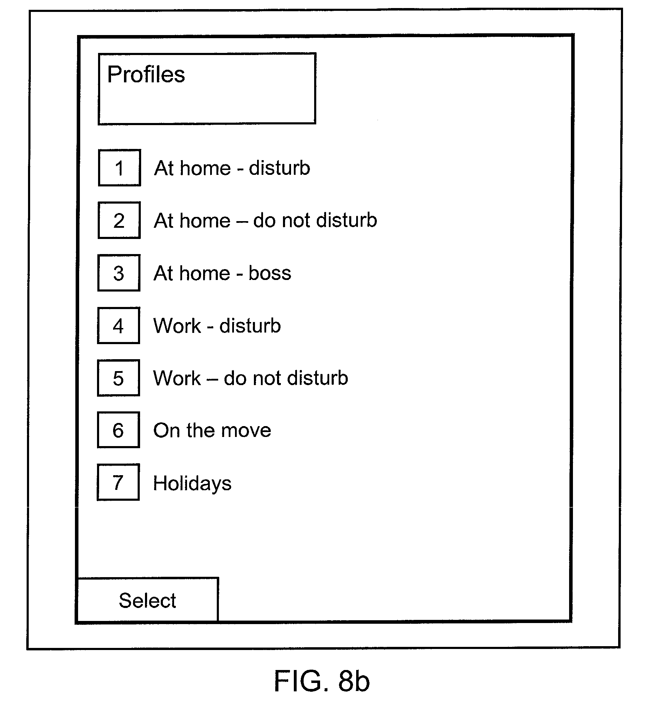

Figure 8 shows an example of an implementation of the top layer on a mobile phone handset. Figure 8a shows the idle-screen of the handset indicating the current Call Profile. Figure 8b shows the list of available Call Profiles. By selecting a different Call Profile the user is always able to override the lower layers.

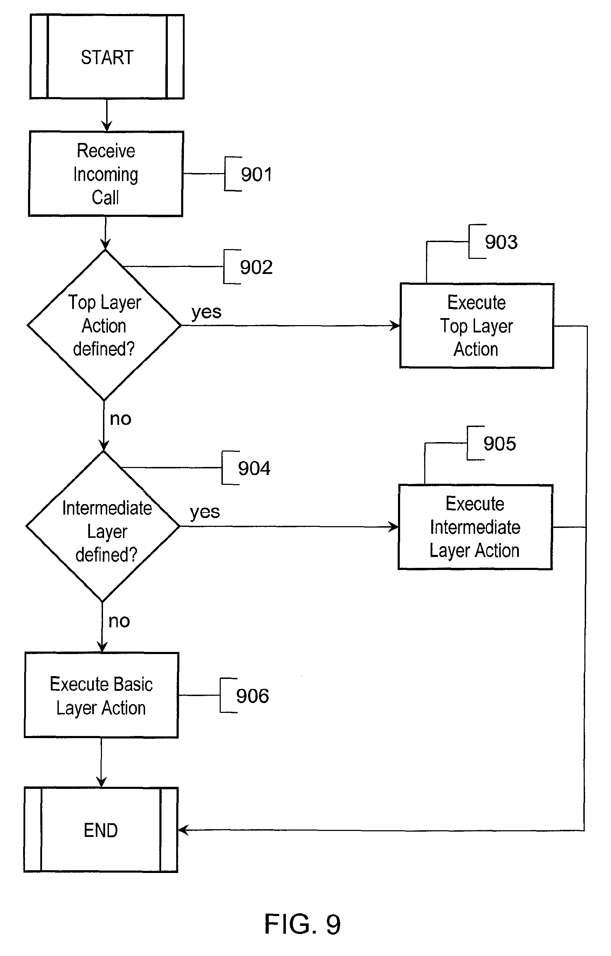

Figure 9 shows a flow chart of how the call forwarding system acts upon receiving an incoming call on any of the phone numbers of the user. In step 901 the system receives a call. In step902 the system checks whether the top layer defines an action for this point of time. If it does, this action is executed (step 903). If it does not, in step 904 the system checks whether the intermediate level defines an action for this point of time. If it does, this action is executed (step 905) if not, the action of the basic level is executed (step906). Notice that this level provides an action for every point in time.

## Claims

1. A system for configuring or programming a time-dependent device or service comprising:
- a basic layer providing an action schedule for a predetermined set of points in time, preferably for every point in time;
- at least one additional layer arranged to provide an action schedule for a point in time that overrides said action schedule of said basic layer.

2. A system according to claim 1 wherein at least one of said action schedules is defined via a mobile device.

3. A system according to claim 1 wherein at least one of said action schedules is defined via an internet website.

4. A system according to claim 1 wherein at least one of said action schedules is automatically generated by synchronizing with an electronic calendar.

5. A system according to claim 1-4 wherein said system is arranged as a call forwarding system.

6. A method for configuring or programming a time-dependent device or service comprising the steps of:
- defining a basic layer providing an action schedule for a predetermined set of points in time, preferably for every point in time;
- defining at least one additional layer arranged to provide an action schedule for a point in time that overrides said action schedule of said basic layer.

7. A method according to claim 6 wherein at least one of said action schedules is defined via a mobile device.

8. A method according to claim 6 wherein at least one of said action schedules is defined via an internet website.

9. A method according to claim 6 wherein at least one of said action schedules is automatically generated by synchronizing with an electronic calendar.

10. A method according to claim 6-9 arranged to programme a call forwarding system.
